Europäisches Patentamt

(19) European Patent Office

Office européen des brevets

(11) Publication number: **0 111 795**

**B1**

(12) **EUROPEAN PATENT SPECIFICATION**

(45) Date of publication of patent specification: **22.06.88**

(21) Application number: **83112106.6**

(22) Date of filing: **01.12.83**

(51) Int. Cl.⁴: **D 06 M 10/00**

(54) A method for increasing hydrophilicity of a fabric material of synthetic fibers.

(30) Priority: **03.12.82 JP 212385/82**
**03.12.82 JP 212386/82**

(43) Date of publication of application:
**27.06.84 Bulletin 84/26**

(45) Publication of the grant of the patent:
**22.06.88 Bulletin 88/25**

(84) Designated Contracting States:
**DE FR GB**

(56) References cited:
**GB-A-2 026 379**
**GB-A-2 089 285**
**US-A-3 385 811**
**US-A-3 620 826**
**TEXTILBETRIEB, vol. 100, no. 5, May 1982,**
**pages 51-53, Würzburg, DE; F.K.DOLEZALEK et**
**al.: "Oberflächenmodifikation durch Corona-**
**und Niedertemperaturplasma-Verfahren im**
**textilen Bereich"**
**CHEMICAL ABSTRACTS, vol. 101, no. 24,**
**December 1984, page 59, no. 212548p,**
**Columbus, Ohio, US; S.Y.MO: "Effect of glow**
**discharge plasma on the wettability of**
**polyester fiber"**

(73) Proprietor: **Shin-Etsu Chemical Co., Ltd.**
**6-1, Ohtemachi 2-chome**
**Chiyoda-ku Tokyo 100 (JP)**

(73) Proprietor: **Emori & Co., Ltd.**
**6-23, Keya 1-chome**
**Fukui-shi Fukui-ken (JP)**

(73) Proprietor: **Nikka Chemical Ind. Co., Ltd.**
**23-1, Bunkyo 4-chome**
**Fukui-shi Fukui-ken (JP)**

(72) Inventor: **Ueno, Susumu Shin-Etsu Kagaku**
**Kougyou**
**Doai Shataku 3-3-8 9809-7, Yatabe Hazaki-cho**
**Kashima-gun Ibaraki-ken (JP)**
Inventor: **Nomura, Hirokazu**
**c/o Renshi-ryo 50-3, Shitte Kamisu-cho**
**Kashima-gun Ibaraki-ken (JP)**
Inventor: **Hashizume, Shinobu**
**23-12 Kowashozu Miyama-cho**
**Asuwa-gun Fukui-ken (JP)**
Inventor: **Nishide, Toshiaki**
**4-1229, Kaminorita**
**Fukui-shi Fukui-ken (JP)**

(74) Representative: **Jaeger, Klaus, Dipl.-Chem. Dr.**
**et al**
**Jaeger, Steffens & Köster Patentanwälte**
**Pippinplatz 4a**
**D-8035 München-Gauting (DE)**

# 0 111 795

**Description**

Background of the invention

The present invention relates to a method for increasing hydrophilicity of a fabric material of, in particular, synthetic fibers. More particularly, the invention relates to a method for imparting a durably increased capacity of water absorption and a durably decreased susceptibility to accumulation of static electricity to a fabric material of or mainly composed of synthetic fibers.

Needless to say, fabric materials currently on use both in the clothing use of people and in the industrial applications are in a very large part produced of synthetic fibers replacing the conventional or traditional natural fibers more and more by virtue of many advantages thereof. One of the largest differences between the properties of the synthetic and natural fibers is in the hydrophilicity-hydrophobicity behavior of them, the former being of course outstandingly less hydrophilic than the latter. The remarkably small hydrophilicity of synthetic fibers sometimes causes serious problems not encountered in the use of natural fibers.

For example, fabric materials of synthetic fibers have a very poor capacity of water or sweat absorption, which is advantageous on one hand but disadvantageous on the other, so that wearers of clothes made of synthetic fibers unavoidably have an unpleasant feeling of stuffiness especially when the clothes are underwears worn in contact with or in the proximity of the skin of the wearer in a hot and humid climate.

Another serious problem caused by the poor hydrophilicity of synthetic fibers is the great accumulation of static electricity on the fibers. Even by setting aside the unpleasantness given to the wearer of clothes of synthetic fibers in such a charged condition with static electricity, many troubles are caused by the static electricity accumulated on the fibers such as the disturbance of the laborer's works in plants, danger of fire or explosion by the spark discharge of the accumulated static electricity, erroneous performance of computers and other delicate electronic instruments due to the influence of the strong electric field around the charged fabric materials and so on.

Many attempts have been of course proposed and practiced in the prior art to solve these problems by increasing the hydrophilicity of the fabric materials of synthetic fibers. For example, the problem of poor water absorption of synthetic fibers can be mitigated by the mixed spinning or mixed weaving with water-absorptive natural fibers. The effectiveness of this method is, however, limited since too much amounts of the natural fibers mixed with the synthetic fibers to attain sufficient hydrophilicity naturally result in the loss of the advantages inherent to synthetic fibers. An alternative method is the treatment of the fabric material with a water-absorbent agent to impart hydrophilicity to the surface of the fibers. Extensive investigations have been and are being undertaken in this direction to propose various kinds of water-absorbent agents effective for a particular type of synthetic fibers. For example, the capacity of water absorption of polyester fibers, e.g. polyethylene terephthalate fibers, can be increased by the treatment with a water-soluble polyester resin. Unfortunately, such a method of the treatment of synthetic fibers with a water-soluble resin is defective in several respects of the poor durability of the effects obtained therewith and the adverse influences on the color fastness of dyed fabric materials in many cases.

Limiting the matter to the antistatic treatment or decrease of the accumulation of static electricity on the synthetic fibers, various antistatic agents have been proposed hitherto. For example, the above mentioned water-soluble resins including water-soluble polyester resins, polyurethane resins, polyacrylamide resins, polyamide resins and the like are of course effective as an antistatic agent with certain durability. Besides, many compounds are known to be effective as an antistatic agent including inorganic salts such as calcium chloride and lithium chloride, guanidine compounds such as guanidine hydrochloride, surface active agents such as those of the types of quaternary ammonium salts and phosphoric acid esters, acrylic polymers having quaternary cationic groups and the like although the effectiveness of the treatment with these compounds is rather temporary.

The durability of the effects obtained with the above described antistatic agents is, however, not quite satisfactory even with the relatively durable polymeric antistatic agents and the antistatic effects obtained therewith are decreased in the long-run use of the treated fabric materials even by setting aside the other problem of the insufficient effectiveness of the method. Furthermore, the method is also not free from the problem of the decreased color fastness of dyed fabric materials giving limitations to the amount and the manner of use of the antistatic agents.

Therefore, need has been felt in textile industry to develop methods for more durable antistatic effects, preferably by physical methods. E.g. US—A—3 620 826 teaches to apply a hydrophilic polymer to a textile material and to subject the thus treated textiles to irradiation with high energy particles, e.g. electrons, protons, neutrons, alpha particles and the like from high energy particle sources in order to improve the soiling characteristics of the hydrophobic textiles.

This high energy particle beam curing means in practice a high penetration depth of the particles into the textile material to be treated.

In contrast thereto, Textilbetrieb *100*, 51 (1982) describes that applying a plasma irradiation (3 kHz alternating current, Ar-atmosphere at a pressure of 133 Pa) to polyester, polyolefins, and polyacrylonitrile fibers followed by graft polymerization of a gaseous monomer increases the hydrophilicity of the such treated textile materials.

2

# 0 111 795

## Summary of the invention

It is an object of the present invention to provide a novel and effective method for imparing remarkable and durable hydrophilicity to a fabric material of or mainly composed of a synthetic fiber so that the fabric material is imparted with increased capacity of water absorption and decreased susceptibility toward accumulation of static electricity.

Thus, the method of the present invention developed as a result of the extensive investigations by the inventors with the above described object comprises the steps of: (a) treating the fabric material with a hydrophilic agent to form a layer thereof on the fiber, the hydrophilic agent being selected from the class consisting of (i) water-soluble acrylic polymers having quaternary-ammonium cationic groups, (ii) water-soluble polyethyleneglycol-grafted cellulose polymers, (iii) water-soluble polyester resins and (iv) water-soluble polyurethane resins; and (b) then exposing the thus treated fabric material to low temperature plasma generated in an atmosphere of an inorganic gas under a pressure in the range from 1.33 to 1333 Pa.

Comparing the present invention with the above cited method of US—A—3 620 826 one can clearly recognize that the object as well as the physical and chemical conditions of the method described therein are completely different from those of the instant process.

In contrast to the method according to Textilbetrieb *100*, 51 (1982), namely Ar-plasma treatment of the pure fiber surface followed by graft polymerization of a gaseous monomer, the present invention teaches a method for increasing hydrophilicity of a fabric material comprising at the first step forming a layer of a hydrophilic agent and at the second step exposing the thus treated fiber to a low temperature plasma in a gaseous atmosphere containing preferably oxygen. I.e. in the procedure according to Textilbetrieb *100*, 51 (1982) the electrons, ions and radicals of the plasma will react with the pure surface of the fiber (followed by graft polymerization of the gaseous monomer). Whereas in the present invention the electrons, ions, and radicals of the plasma are only able to interact with the layers of the hydrophilic agents applied on the fibers, because of their low penetration depth. Therefore, not only the reaction mechanism of the two processes will be different, but also the chemical structures and, consequently, the characteristics of the thus obtained surface layers on the fibers.

Furthermore, in contrast to the pure noble gas atmosphere of the method according to Textilbetrieb *100*, 51 (1982) the present invention teaches a plasma generated in an inorganic gas, preferably containing oxygen. Consequently, the chemical reactive species (electronically excited molecules, ions resp. radicals of the actual gas) will be different, yielding eventually different chemical functions on the surface of the fiber.

Finally, the method according to Textilbetrieb *100*, 51 (1982) only comprises simple conventional monomers (acrylic acid, methacrylic acid, acrylates, vinyl acetate), whereas the present application teaches the application of very specific water soluble polymers.

In sum, the present invention differs from the above cited method by three important characteristics, namely

— by the consecutiveness of the steps of the respective procedure,
— by the gas atmosphere of the plasma and consequently by the reactive species, and
— by the chemicals for building up the surface layer on the fiber.

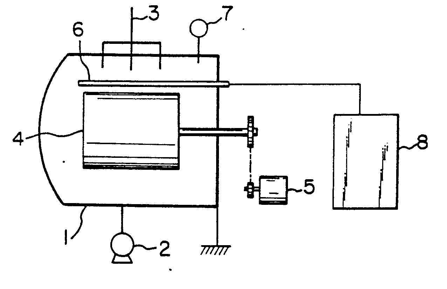

## Brief description of the drawing

The figure is a schematic illustration of an apparatus used for the treatment of the fabric material with low temperature plasma.

## Detailed description of the preferred embodiments

As is mentioned above, the method of the present invention is applicable to a fabric material of or mainly composed of a synthetic fiber. The synthetic fiber here implied includes polyester fibers, nylon fibers, acrylic fibers, polypropylene fibers, acetate fibers, polyvinyl alcohol fibers and the like. The fabric material may be composed of two kinds or more of these synthetic fibers as mixed-spun or mixed-woven. Furthermore, the fabric material may contain natural fibers provided that the weight proportion of the synthetic fibers in the fabric material is at least 50% since the effectiveness of the inventive method is less remarkable when the fabric material contains more than 50% of natural fibers. The form of the fabric material is not particularly limitative including woven and knit cloths and non-woven fabrics as well as threads and yarns.

The method for performing the treatment with the above mentioned hydrophilic agent is conventional and an aqueous solution of the hydrophilic agent is applied to the fabric material usually by dipping or by padding followed by heating for drying and, eventually, curing.

The next step, i.e. step (b), in the inventive method is the treatment of the fabric material after the treatment with the hydrophilic agent by exposure to an atmosphere of low temperature plasma.

The procedure of the low temperature plasma treatment is also well known in the art. That is, the fabric material of synthetic fibers under treatment is placed inside a plasma chamber capable of being evacuated to a reduced pressure and equipped with two or two sets of discharge electrodes, one or one set thereof being grounded and the other or the other set thereof serving as a power electrode, and low temperature

3

plasma is generated inside the plasma chamber by supplying an electric power to the electrodes at a voltage of, for example, 400 volts or higher while the atmosphere inside the plasma chamber is kept under a reduced pressure with a stream of an inorganic gas.

Suitable inorganic gases to fill the plasma chamber under a reduced pressure are exemplified by helium, neon, argon, nitrogen, oxygen, air, nitrous oxide, nitrogen monoxide, nitric oxide, carbon monoxide, carbon dioxide, bromine cyanide, sulfur dioxide, hydrogen sulfide and the like. These inorganic gases may be used either alone or as a mixture of two kinds or more according to need. In particular, it is preferable in the inventive method that the inorganic gas is an oxidizing gas which may be oxygen or a gaseous mixture containing at least 10% by volume of oxygen.

The pressure of the gaseous atmosphere inside the plasma chamber is preferably in the range from 1.3 to 1333 Pa.

Low temperature plasma is readily generated with stability by the glow discharge in the atmosphere under a pressure in this range by supplying an electric power of, for example, 10 watts to 100 kilowatts at a frequency of 10 kHz to 100 MHz between the electrodes installed inside the plasma chamber although the frequency is not particularly limited to the above mentioned high frequency range but may be direct current, low frequency or a frequency of microwave range. The electrodes are not necessarily installed inside the plasma chamber but may be installed outside the plasma chamber or may be replaced with a single work coil for high frequency surrounding the plasma chamber although installation of the discharge electrodes inside the plasma chamber is preferable from the standpoint of obtaining effective results of the low temperature plasma treatment. These electrodes are connected to the power source, e.g. high frequency generator, either by capacitive coupling or by inductive coupling.

The forms of the electrodes are also not particularly limitative and the power electrode and the grounded electrode may be of the same form or different forms from each other. Plate-like, ring-wise, rod-like and cylindrical electrodes are equally suitable though dependent on the particular requirements. A convenient design of the discharge electrodes is that the walls of the plasma chamber are made of a metal to serve as a grounded electrode and a power electrode of a suitable form is installed inside the plasma chamber as insulated from the chamber walls. Assuming that the electrodes are installed inside the plasma chamber, the distance between the grounded and power electrodes is preferably in the range from 1 to 30 cm or, more preferably, from 2 to 10 cm in order to obtain higher efficiency of the treatment.

The material of the electrodes should of course be conductive and copper, iron, stainless steel, aluminum and the like metals are suitable as the material of the electrodes. In order to ensure stability of the discharge between the electrodes, it is preferable that the surface of the electrodes or, in particular, the power electrode is provided with a heat-resistant and electrically insulating coating layer of, for example, porcelain enamel, glass or ceramic having a dielectric strength or breakdown voltage of, desirably, at least 1000 volts/mm.

It is a very remarkable and distinctive advantage that the excellent hydrophilicity of the fabric materials of synthetic fibers obtained in the above described method of the invention is highly durable without decreasing the color fastness of dyed fabric materials.

In the following, examples are given to illustrate the inventive method and the effectiveness thereof in more detail.

The apparatus for the low temperature plasma treatment used in the following examples is illustrated in the accompanying drawing. In the figure, the plasma chamber 1 is made of a stainless steel and capable of being evacuated by means of the vacuum pump 2 down to a pressure of 1.33 Pa or below. The plasma chamber 1 is provided with a gas inlet 3 through which a gas is introduced into the plasma chamber 1 to constitute the gaseous atmosphere inside the chamber 1. The open end of the gas inlet 3 is branched in manifold (in three branches in the figure) to ensure uniformity of the atmospheric condition inside the chamber 1. A stainless steel-made rotatable cylindrical electrode 4 inside the plasma chamber 1 is supported vacuum-tightly by a faceplate of the plasma chamber 1 in a cantilever manner and driven by an electric motor 5 installed outside the chamber 1 at a controllable velocity. The rotatable cylindrical electrode 4 is electrically grounded through the walls of the plasma chamber 1. The temperature of the rotatable cylindrical electrode 4 can be controlled by passing a heating or cooling medium through inside. Facing the rotatable cylindrical electrode 4, a rod-like electrode 6, which serves as a power electrode, is held in parallel to the rotating axis of the rotatable cylindrical electrode 4 to form a gap of uniform width therebetween. The power electrode 6 is, of course, electrically insulated from the walls of the plasma chamber 1 and connected to the ungrounded terminal of a high frequency generator 8. The pressure inside the plasma chamber 1 can be determined by means of a Pirani gauge 7 connected to the chamber 1.

Example 1

A woven cloth of pure polyester fiber was subjected to a hydrophilic treatment with either one of the following water-absorbent agents I to III by the padding method of 1 dipping—1 nipping with an aqueous solution of the respective water-absorbent agent to give a pick-up of 70% by weight followed by drying at 110°C for 3 minutes and curing at 180°C for 30 seconds.

    I: a water-soluble polyester resin (Nicepole® PR-555, a product of Nikka Chemical Co.) in a 5% aqueous solution

4

**0 111 795**

II: a water-soluble urethane resin (Evafanol® AS-1, a product by the same company) in a 5% aqueous solution combined with a 0.5% aqueous solution of an organotin compound (Evafanol® CS, a product by the same company) as a catalyst

III: a water-soluble urethane resin (Evafanol® N, a product by the same company) in a 5% aqueous solution combined with a 1% aqueous solution of a catalyst (Evafanol® CS, a product by the same company)

A test cloth of 30 cm by 30 cm wide taken by cutting each of the thus treated cloths and the same cloth before the treatment with the hydrophilic agent was spread and fixed on the rotatable cylindrical grounded electrode of the plasma apparatus as described before and the plasma chamber was evacuated. When the pressure inside the chamber had reached 4 Pa oxygen was continuously introduced into the chamber at a rate of 0.5 liter/minute so that the pressure inside the plasma chamber was maintained at 9.3 Pa by the balance of the continuous evacuation and introduction of the oxygen gas.

While keeping the atmospheric conditions as described above, low temperature plasma was generated for 150 seconds inside the chamber by supplying a high frequency electric power of 3 kilowatts at a frequency of 110 kHz to the electrodes to expose the surface of the cloth to the atmosphere of low temperature plasma. This procedure was repeated with the cloth reversed on the electrode surface to expose the other surface of the cloth to the plasma atmosphere.

The thus plasma-treated and untreated test cloths were subjected to the test for the evaluation of the capacity of water absorption according to the procedure of the method A, i.e. dropping method, specified in JIS L 1096 to give the results shown in Table 1. The test was undertaken for each cloth either as such or after 50 times of repeated laundering each with an aqueous solution of 1 g/liter concentration of a synthetic detergent (ZAB®, a product by Kao Soap Co.) in a bath ratio of 1:30 at 40°C for 10 minutes followed by rinse and dehydration.

TABLE 1

Unit: seconds

| Example No. | Hydrophilic agent | Before plasma-treatment | | After plasma-treatment | |
|---|---|---|---|---|---|
| | | Before laundering | After laundering | Before laundering | After laundering |
| 1 | None | >180 | >180 | 0.5 | 20 |
| | I | 2 | 30 | 0.5 | 1 |
| | II | 1 | >180 | 0.5 | 1 |
| | III | 15 | 60 | 0.5 | 1 |
| 2 | None | 15 | 40 | 0.5 | 12 |
| | I | 1 | 8 | 0.5 | 0.5 |
| | II | 1 | 34 | 0.5 | 0.5 |
| | III | 1 | 12 | 0.5 | 0.5 |

Example 2

The experimental procedure was substantially the same as in Example 1 except that the atmosphere of the low temperature plasma was maintained under a pressure of 13.3 Pa by continuously introducing a 1:3 by volume gaseous mixture of oxygen and argon at a rate of 1 liter/minute and the low temperature plasma was generated for 60 seconds by supplying an electric power of 5 kilowatts to the electrodes. The material of the test cloth in this example was a polyester/cotton mixed-spun gaberdine fabric in a mixing ratio of 65:35. The results of the test for the capacity of water absorption undertaken in the same manner as in Example 1 are shown in Table 1.

Example 3

A woven cloth of pure polyester fiber dyed in blue with 4% (o.w.f.) of Dianix® Blue BG-FS was treated in advance with either one of the following antistatic agents I to III each by padding of 1 dipping—1 nipping with an aqueous solution of the agent to give a pick-up of 68% by weight followed by drying at 110°C for 3 minutes and curing at 180°C for 30 seconds.

I: a quaternary cationic acrylic polymer (Nicepole® FH, a product by Nikka Chemical Co.) in a 5% aqueous solution

5

II: a grafted cellulose (Nicepole® TF-501, a product by the same company) in a 10% aqueous solution

III: a water soluble polyester resin (Nicepole® PR-333, a product by the same company) in a 10% aqueous solution.

Each of the thus treated test cloths and the same cloth before treatment with the antistatic agent was subjected to the treatment with low temperature plasma. The conditions of the plasma treatment were substantially the same as in Example 1 except that the atmosphere for the plasma generation was kept under a pressure of 17.3 Pa by continuously introducing oxygen gas at a rate of 1.5 liters/minute and the length of the treatment time was 200 seconds.

The thus plasma-treated test cloths as well as the same test cloths before the plasma treatment were subjected to the measurements of the surface resistivity in ohm and the charge voltage induced by rubbing in volts either as treated or after 50 times of repeated laundering in the same conditions as given in Example 1. The results are shown in Table 2 below. The measurement of the surface resistivity of the test cloths was undertaken by use of an ultrainsulation resistance tester (Model SM-5 manufactured by Toa Denpa Kogyo Co.) at 20°C in a room of 40% relative humidity and the charge voltage by rubbing was measured by use of a rotary static tester manufactured by Koa Shokai Co. under the same atmospheric conditions as above.

TABLE 2

| Antistatic agent | Plasma treatment | Surface resistivity, ohm | | Charge voltage by rubbing, volts | |
|---|---|---|---|---|---|
| | | Before laundering | After laundering | Before laundering | After laundering |
| None | no | $>2\times10^{13}$ | — | 4900 | — |
| | yes | — | — | — | — |
| I | no | $5\times10^{6}$ | $>2\times10^{13}$ | 24 | 4200 |
| | yes | $3\times10^{6}$ | $5\times10^{11}$ | 22 | 1300 |
| II | no | $8\times10^{10}$ | $3\times10^{12}$ | 580 | 2400 |
| | yes | $5\times10^{10}$ | $9\times10^{10}$ | 540 | 600 |
| III | no | $3\times10^{10}$ | $8\times10^{10}$ | 180 | 630 |
| | yes | $3\times10^{10}$ | $6\times10^{10}$ | 150 | 420 |

## Claims

1. A method for increasing hydrophilicity of a fabric material of or mainly composed of a synthetic fibre which comprises the successive steps of:

(a) treating the fabric material with a hydrophilic agent to form a layer thereof on the fibre, the hydrophilic agent being subjected from the class consisting of (i) water-soluble acrylic polymers having quaternary-ammonium cationic groups, (ii) water-soluble polyethyleneglycol-grafted cellulose polymers, (iii) water-soluble polyester resins and (iv) water-soluble polyurethane resins; and

(b) then exposing the thus treated fabric material to low temperature plasma generated in an atmosphere of an inorganic gas under a pressure in the range from 1.33 to 1333 Pa.

2. The method as claimed in claim 1 wherein the inorganic gas is oxygen or a gaseous mixture containing at least 10% by volume of oxygen.

## Patentansprüche

1. Verfahren zur Erhöhung der Hydrophilie eines Gewebes aus synthetischen Fasern bzw. hauptsächlich aus denselben, dadurch gekennzeichnet, daß man

a) das Gewebe zur Bildung einer Schicht auf der Faser mit einer hydrophilen Substanz behandelt, ausgewählt aus der Verbindungsklasse, die aus

(I) wasserlöslichen Acrylpolymeren mit kationischen quartären Ammoniumgruppen,

(II) wasserlöslichen Polyethylenglycol-gepfropften Cellulose-Polymeren,

(III) wasserlöslichen Polyesterharzen und

(IV) wasserlöslichen Polyurethanharzen besteht; und

6

b) das derart behandelte Gewebe einem Niedertemperatur-Plasma aussetzt, erzeugt in der Atmosphäre eines anorganischen Gases im Druckbereich zwischen 1.33 und 1333 Pa.

2. Verfahren nach Anspruch 1, dadurch gekennzeichnet, daß das anorganische Gas Sauerstoff oder ein mindestens 10 Volumen-% Sauerstoff enthaltendes Gasgemisch ist.

**Revendications**

1. Procédé pour augmenter le pouvoir hydrophile d'un matériau textile constitué entièrement et principalement de fibres synthétiques, comprenant les étapes successives dans lesquelles

(a) on traite le matériau textile avec un agent hydrophile pour former une couche de cet agent sur la fibre, l'agent hydrophile étant choisi dans la classe constituée de (i) des polymères acryliques solubles dans l'eau comprenant des groupes cationiques d'ammonium quaternaire, des polymères cellulosiques greffés au polyéthylène glycol, solubles dans l'eau, (iii) des résines polyester solubles dans l'eau et (iv) des résines polyuréthane solubles dans l'eau; et

(b) on expose ensuite le matériau textile ainsi traité à un plasma à basse température produit sous atmosphère de gaz minéral, sous une pression dans la gamme de 1,33 à 1.333 Pa.

2. Procédé selon la revendication 1, dans lequel le gaz minéral est de l'oxygène ou un mélange gazeux contenant au moins 10% en volume d'oxygène.